# EUROPÄISCHE PATENTSCHRIFT

(11) **EP 3 130 645 B1**
(45) Veröffentlichungstag und Bekanntmachung des Hinweises auf die Patenterteilung: **31.01.2018**
(21) Anmeldenummer: 16182999.9
(22) Anmeldetag: 05.08.2016
(51) Int. Cl.: C09D 7/12, C09D 11/00

(54) **HAFTVERMITTLER**
ADHESION PROMOTER
PROMOTEUR D'ADHÉSION

(30) Priorität: 10.08.2015 DE 202015104178 U
(43) Veröffentlichungstag der Anmeldung: 15.02.2017
(73) Patentinhaber: Hubergroup Inda Private Ltd., 396191 Vapi (Gujarat) (IN)
(72) Erfinder: Tiwari, Anil Kumar R., 396191 Vapi (Gujarat) (IN); Jamaluddin, Malik, 396191 Vapi (Gujarat) (IN)
(74) Vertreter: Henkel, Breuer & Partner

(56) Entgegenhaltungen:
- WO-A1-03/076546
- WO-A1-2004/053003
- WO-A1-2005/097919
- GB-A- 2 161 811
- US-A- 6 007 610

## Beschreibung

Die vorliegende Erfindung betrifft einen Haftvermittler und insbesondere einen Haftvermittler zum Verbessern der Haftung einer Druckfarbe bzw. eines Drucklacks auf einem Substrat, wie insbesondere auf einer Lebensmittelverpackung.

Drucklacke und insbesondere Druckfarben müssen eine Vielzahl an Anforderungen erfüllen, um zum Bedrucken von Lebensmittelverpackungen eingesetzt werden zu können. Neben einer möglichst guten Haftung der Druckfarbe auf der Verpackung, dürfen die Bestandteile der Druckfarbe, sofern diese - wie dies regelmäßig der Fall ist - kein Lebensmittel sind, nicht oder nur sehr wenig migrieren, damit diese nicht das in der Verpackung enthaltene Lebensmittel kontaminieren. Dies ist insbesondere in dem Fall erforderlich, in dem das Lebensmittel in direkten Kontakt mit der Druckfarbe gelangt, wie beispielsweise in dem Fall einer auf der Innenseite bedruckten Lebensmittelverpackung, aber auch in dem Fall einer auf der Außenseite bedruckten Lebensmittelverpackung.

Zur Verbesserung der Haftung der Druckfarbe auf der Verpackung werden solchen Druckfarben üblicherweise Haftvermittler zugesetzt. Dies ist insbesondere in dem Fall notwendig, in dem die Verpackung aus einem Material besteht, auf dem Druckfarben nur schwer haften, wie beispielsweise aus Polyethylenterephthalat oder aus Polyamid. Um für den Einsatz auf Lebensmittelverpackungen geeignet zu sein, darf auch der Haftvermittler keine oder nur sehr wenige migrierende Verbindungen enthalten, um eine Kontamination des in der Verpackung enthaltenen Lebensmittels auszuschließen.

Aus der WO 2004/053003 A1 ist ein Haftvermittler zum Verbessern der Haftung einer Druckfarbe auf einem Kunststoffsubstrat bekannt, welcher das Reaktionsprodukt einer Organometallverbindung, wie insbesondere Tetraisopropyltitanat, und einer Organophosphorverbindung, wie insbesondere Di-n-butylposphat, enthält, wobei das Verhältnis der Gesamtzahl an P-OH-Gruppen in dem Phosphatester zu der Anzahl an Molen des Metalls in der Organometallverbindung 3,1:1 bis 8:1 beträgt. Auf dem Markt ist eine Reihe kommerziell vertriebener Haftvermittler auf der Basis solcher Reaktionsprodukte aus Tetraisopropyltitanat und einer oder mehreren Organophosphorverbindungen bekannt. Allerdings enthalten diese Haftvermittler einen hohen Anteil an niedermolekulargewichtigen Verbindungen, wie insbesondere Tri-n-butylphosphat, welche aufgrund ihres geringen Molekulargewichts eine hohe Migrationsfähigkeit aufweisen. Zudem gelten für diese niedermolekularen Verbindungen sehr niedrige Migrationslimits, so dass solche Haftvermittler enthaltende Druckfarben und Drucklacke zum Bedrucken von Lebensmittelverpackungen nicht geeignet oder zumindest nicht zufriedenstellend sind.

Aus der WO 2005/097919 A1 ist ein für eine Druckfarbe geeigneter Haftvermittler bekannt, welcher das Reaktionsprodukt eines Polymers mit einer Organophosphorverbindung und mit einer Titanverbindung, wie beispielsweise Titanalkoxyd, ist.

Die WO 03/076546 A1 offenbart einen Haftvermittler mit einem flexiblen Rückgrat und Silanresten sowie Titanat- oder Zirkonatresten, wobei der Titanatrest auch Phosphatreste enthalten kann.

Die US 6,007,610 A beschreibt eine Druckfarbe, welche 0,1 bis 30 % Pigment und 0,1 bis 99,9 % vernetztes Polymer enthalten, wobei für das Polymer Alkyltitanate eingesetzt werden kann, wie beispielsweise Titan (IV) zu Butoxid oder Isopropy-Itriisostearoyltitanat.

Die GB 2 161 811 A offenbart ein Organotitanat, welches das Reaktionsprodukt ein Titanorthoesters und wenigstens eines Monoalkylphosphats ist.

Aufgabe der vorliegenden Erfindung ist die Bereitstellung eines Haftvermittlers zum Verbessern der Haftung einer Druckfarbe bzw. eines Drucklacks auf einem Substrat, insbesondere auf einer Lebensmittelverpackung, welcher eine gute Haftung der Druckfarbe bzw. des Drucklacks insbesondere auch auf Kunststoffverpackungen, wie beispielsweise solchen aus Polyethylenterephthalat oder aus Polyamid, gewährleistet und sich zudem durch eine sehr geringe Migrationsfähigkeit auszeichnet.

Erfindungsgemäß wird diese Aufgabe gelöst durch einen Haftvermittler, welcher ein Copolymer enthält, das aus
i) wenigstens einem C₁₋₅-Alkyltitanatmonomer und/oder C₁₋₅-Alkylzirkonatmonomer, wobei die Alkylreste linear oder verzweigt sind,
ii) wenigstens einem Mono-C₄₋₁₀-alkylphosphatmonomer und
iii) wenigstens einem Di-C₄₋₁₀-alkylphosphatmonomer zusammengesetzt ist,
wobei die Mono- und Di-C₄₋₁₀-alkylphosphatmonomere sowohl lineare als auch verzweigte C₄₋₁₀-Alkylreste umfassen, wobei das molare Verhältnis von verzweigten C₄₋₁₀-Alkylresten bezogen auf die Summe von linearen und verzweigten C₄₋₁₀-Alkylresten in dem Copolymer 10 bis 90 % beträgt.

Diese Lösung basiert auf der überraschenden Erkenntnis, dass nach der Synthese eines Copolymers aus i) wenigstens einem C₁₋₅-Alkyltitanatmonomer und/oder C₁₋₅-Alkylzirkonatmonomer und einer Mischung aus ii) wenigstens einem Mono-C₄₋₁₀-alkylphosphatmonomer und iii) wenigstens einem Di-C₄₋₁₀-alkylphosphatmonomer, wobei die Mono- und Di-C₄₋₁₀-alkylphosphatmonomere sowohl lineare als auch verzweigte C₄₋₁₀-Alkylreste umfassen, in Mengenverhältnissen und unter Reaktionsbedingungen, bei denen aus diesen Monomeren ein Copolymer gebildet wird, bei dem das molare Verhältnis von verzweigten C₄₋₁₀-Alkylresten bezogen auf die Summe von linearen und verzweigten C₄₋₁₀-Alkylresten in dem Copolymer 10 bis 90 % beträgt, in dem Reaktionsprodukt nur sehr geringe Mengen an migrationsfähigen niedermolekularen Verbindungen und insbesondere nur sehr geringe Mengen an niedermolekularen Verbindungen mit sehr niedrigen spezifischen Migrationslimits (10 ppb) enthalten sind, so dass dieses hervorragend als Haftvermittler insbesondere für Druckfarben bzw. Drucklacken zum Bedrucken einer Lebensmittelverpackung geeignet ist.

Grundsätzlich können die Mono- und Di-C₄₋₁₀-alkylphosphatmonomere jeweils den gleichen C₄₋₁₀-Alkylrest, wie beispielsweise jeweils einen Butylrest, oder voneinander verschiedene C₄₋₁₀-Alkylreste, wie beispielsweise einen Propylrest in dem Monoalkylphosphatmonomer und Pentyl in dem Dialkylphosphatmonomer, aufweisen. Gute Ergebnisse werden jedoch insbesondere erhalten, wenn das Monoalkylphosphatmonomer und das Dialkylphosphatmonomer jeweils den gleichen C₄₋₁₀-Alkylrest aufweisen.

Es ist zudem bevorzugt, dass sowohl das Monoalkylphosphatmonomer als auch das Di-C₄₋₁₀-alkylphosphatmonomer jeweils einen bzw. zwei C₄₋₆-Alkylreste aufweisen.

Besonders gute Ergebnisse werden dabei insbesondere erhalten, wenn das Mono-C₄₋₁₀-alkylphosphatmonomer Monobutylphosphatmonomer und das Di-C₄₋₁₀-alkylphosphatmonomer Dibutylphosphatmonomer ist.

Wie vorstehend dargelegt, führt die Mischung aus wenigstens einem Mono-C₄₋₁₀-alkylphosphatmonomer und wenigstens einem Di-C₄₋₁₀-alkylphosphatmonomer bei der Synthese des Copolymers, in dem das molare Verhältnis von verzweigten C₄₋₁₀-Alkylresten bezogen auf die Summe von linearen und verzweigten C₄₋₁₀-Alkylresten 10 bis 90 % beträgt, dazu, dass das Reaktionsprodukt nur sehr geringe Mengen an migrationsfähigen niedermolekularen Verbindungen mit äußerst niedrigem spezifischem Migrationslimit enthält, weswegen dieses hervorragend als Haftvermittler insbesondere für Druckfarben bzw. Drucklacken zum Bedrucken einer Lebensmittelverpackung geeignet ist. Gute Ergebnisse werden dabei insbesondere erhalten, wenn das molare Verhältnis von verzweigten C₄₋₁₀-Alkylresten bezogen auf die Summe von linearen und verzweigten C₄₋₁₀-Alkylresten in dem Copolymer 20 bis 80 %, besonders bevorzugt 30 bis 70 %, weiter bevorzugt 40 bis 60 %, ganz besonders bevorzugt 45 bis 55 %, wie beispielsweise etwa 50 %, beträgt.

In Weiterbildung des Erfindungsgedankens wird es vorgeschlagen, die beiden vorgenannten Ausführungsformen miteinander zu kombinieren. Danach ist es besonders vorteilhaft, wenn das Mono-C₄₋₁₀-alkylphosphatmonomer Monobutylphosphatmonomer und das Di-C₄₋₁₀-alkylphosphatmonomer Dibutylphosphatmonomer ist, wobei das molare Verhältnis von iso-Butylresten bezogen auf die Summe von iso-Butylresten und n-Butylresten in dem Copolymer 20 bis 80 %, bevorzugt 30 bis 70 %, besonders bevorzugt 40 bis 60 % und ganz besonders bevorzugt 45 bis 55 % beträgt. Ein derartiger Haftvermittler weist nicht nur eine sehr gute Haftung auf Kunststoffsubstrat, wie beispielsweise solchem aus Polyethylenterephthalat oder Polyamid, auf, sondern enthält nur sehr wenige niedermolekulare Verbindungen und insbesondere nur sehr geringe Mengen an Tributylphosphat, so dass Migrationslimits problemlos eingehalten werden können.

Insbesondere enthält die Lösung eines solchen Haftvermittlers, bezogen auf dessen Gesamtformulierung, vorzugsweise weniger als 0,25 Gew.-% Tributylphosphat. Zudem ist es bevorzugt, dass die Menge an in dem Haftvermittler enthaltenem Tributylphosphat weniger als 0,20 Gew.-%, weiter bevorzugt maximal 0,15 Gew.-%, besonders bevorzugt maximal 0,10 Gew.-%, noch weiter bevorzugt maximal 0,075 Gew.-%, ganz besonders bevorzugt maximal 0,06 Gew.-% und höchst bevorzugt maximal 0,04 Gew.-% beträgt. Solche Haftvermittler weisen praktisch kein Migrationspotential auf, da die haftvermittelnde Komponente als Polymer vorliegt und der Gehalt an niedermolekularen Bestandteilen aus der Synthese äußerst niedrig ist.

Gemäß einer weiteren besonders bevorzugten Ausführungsform der vorliegenden Erfindung beträgt das gewichtsgemittelte Molekulargewicht des Copolymers in dem erfindungsgemäßen Haftvermittler 800 bis 10.000 g/mol, weiter bevorzugt 1.000 bis 2.000 g/mol und besonders bevorzugt 1.000 bis 1.500 g/mol. Gemäß der vorliegenden Erfindung wird das Molekulargewicht des Copolymers durch Gelpermeationschromatographie bestimmt.

Nicht nur im Hinblick auf die Verbesserung der Haftung der Druckfarbe bzw. des Drucklacks an dem zu bedruckenden Substrat, sondern insbesondere auch im Hinblick auf eine besonders niedrige Migrationsfähigkeit des Haftvermittlers, wird es in Weiterbildung des Erfindungsgedankens vorgeschlagen, dass der Haftvermittler weniger als 60 Gew.-%, bevorzugt weniger als 50 Gew.-%, besonders bevorzugt weniger als 45 Gew.-% und ganz besonders bevorzugt maximal 40 Gew.-% von Verbindungen mit einem gewichtsgemittelten Molekulargewicht von weniger als 1.000 g/mol enthält.

Besonders gute Ergebnisse werden erhalten, wenn die beiden vorgenannten Ausführungsformen kombiniert werden, d.h., wenn das gewichtsgemittelte Molekulargewicht des Copolymers in dem Haftvermittler 1.000 bis 2.000 g/mol beträgt und der Haftvermittler weniger als 40 Gew.-% von Verbindungen mit einem gewichtsgemittelten Molekulargewicht von weniger als 1.000 g/mol enthält.

Vorzugsweise beträgt das molare Verhältnis von in den Mono- und Di-C₄₋₁₀-alkylphosphatmonomeren, bevorzugt Mono- und Dibutylphosphatmonomeren, enthaltenen P-OH-Gruppen zu dem Metall in dem C₁₋₅-Alkyltitanatmonomer und/oder C₁₋₅-Alkylzirkonatmonomer 0,5:1 bis 2,5:1. Dies führt zu einer besonders gut haftenden und wenig Migrationspotential aufweisenden Zusammensetzung. Bei dieser Ausführungsform der vorliegenden Erfindung ist es besonders bevorzugt, wenn das vorgenannte Verhältnis 1:1 bis 2:1, besonders bevorzugt 1,3:1 bis 1,8:1 und ganz besonders bevorzugt 1,5:1 bis 1,7:1 beträgt.

Als Komponente i) ist in dem Copolymer des erfindungsgemäßen Haftvermittlers gemäß einer weiteren besonders bevorzugten Ausführungsform der vorliegenden Erfindung vorzugsweise ein lineares oder verzweigtes C₁₋₅-Alkyltitanatmonomer enthalten. Besonders gute Ergebnisse insbesondere im Hinblick auf die Haftfähigkeit werden dabei erhalten, wenn das Copolymer als Komponente i) ein Tetra-C₁₋₅-alkyltitanatmonomer, besonders bevorzugt ein Tetra-C₂₋₄-alkyltitanatmonomer, ganz besonders bevorzugt ein Tetrapropyltitanatmonomer und höchst bevorzugt Tetraisopropyltitanat enthält.

Gemäß einer ganz besonders bevorzugten Ausführungsform der vorliegenden Erfindung ist das Copolymer des Haftvermittlers aus wenigstens einem Tetraisopropyltitanatmonomer, wenigstens einem Monobutylphosphatmonomer und wenigstens einem Dibutylphosphatmonomer zusammengesetzt, wobei die Mono- und Dibutylphosphatmonomere sowohl iso-Butylreste als auch n-Butylreste umfassen, wobei das molare Verhältnis von iso-Butylresten bezogen auf die Summe von iso-Butylresten und n-Butylresten in dem Copolymer 10 bis 90 % beträgt.

Besonders gute Ergebnisse werden bei der vorstehenden Ausführungsform erhalten, wenn das molare Verhältnis von iso-Butylresten bezogen auf die Summe von iso-Butylresten und n-Butylresten in dem Copolymer 20 bis 80 %, besonders bevorzugt 30 bis 70 %, weiter bevorzugt 40 bis 60 % und ganz besonders bevorzugt 45 bis 55 % beträgt, und, wenn das molare Verhältnis von Titanatmonomer bezogen auf die Summe von Titanatmonomer, Monobutylphosphatmonomer und Dibutylphosphatmonomer in dem Copolymer 25 bis 75 % und besonders bevorzugt 40 bis 60 %, wie beispielsweise etwa 50 %, beträgt.

Ein zur Herstellung des erfindungsgemäßen Haftvermittlers geeignetes Verfahren umfasst beispielsweise die nachfolgenden Schritte:
a) Bereitstellen einer Mischung aus einem C₄₋₁₀-n-Alkohol, einem C₄₋₁₀-iso-Alkohol und Phosphorpentoxid,
b) Reagieren der in dem Schritt a) bereitgestellten Mischung bei 60 bis 150°C für 0,1 bis 5 Stunden, bevorzugt bei 80 bis 100°C für 0,25 bis 2 Stunden,
c) Abkühlen der Reaktionsmischung auf 0 bis 50°C, bevorzugt auf Umgebungstemperatur,
d) Zugabe von einem C₁₋₅-Alkyltitanat und/oder C₁₋₅-Alkylzirkonat zu der in dem Schritt c) erhaltenen Mischung,
e) Reagieren der in dem Schritt d) bereitgestellten Mischung bei 40 bis 150°C für 0,1 bis 5 Stunden, bevorzugt bei 70 bis 90°C für 1 bis 3 Stunden,
f) Abkühlen der Reaktionsmischung auf 0 bis 50°C, bevorzugt auf Umgebungstemperatur, und
g) optional Zugabe von C₁₋₅-Alkohol und/oder Verdünnungsmittel.

Dementsprechend umfasst ein Verfahren zur Herstellung des gemäß der vorliegenden Erfindung ganz besonders bevorzugten Copolymers, das aus wenigstens einem Tetraisopropyltitanatmonomer, wenigstens einem Monobutylphosphatmonomer und wenigstens einem Dibutylphosphatmonomer zusammengesetzt ist, wobei die Mono- und Dibutylphosphatmonomere sowohl iso-Butylreste als auch n-Butylreste umfassen, wobei das molare Verhältnis von iso-Butylresten bezogen auf die Summe von iso-Butylresten und n-Butylresten in dem Copolymer 10 bis 90 % beträgt, beispielsweise die folgenden Schritte:
a) Bereitstellen einer Mischung aus n-Butanol, iso-Butanol und Phosphorpentoxid,
b) Reagieren der in dem Schritt a) bereitgestellten Mischung bei 80 bis 100°C für 0,25 bis 2 Stunden, bevorzugt bei 90 bis 95°C für 0,5 bis 1 Stunde,
c) Abkühlen der Reaktionsmischung auf 30 bis 35°C,
d) Zugabe von Titantetraisopropylat zu der in dem Schritt c) erhaltenen Mischung,
e) Reagieren der in dem Schritt d) bereitgestellten Mischung bei 40 bis 100°C für 1 bis 3 Stunden, bevorzugt bei 80 bis 90°C für 1,5 bis 2 Stunden,
f) Abkühlen der Reaktionsmischung auf 40 bis 50°C, und
g) Zugabe von Isopropanol und/oder optional Verdünnungsmittel, bevorzugt Ethanol und Ethylacetat, und Rühren der Mischung für 0,1 bis 2 Stunden, bevorzugt 0,5 Stunden.

Vorzugsweise wird in dem Schritt a) eine Säurezahl zwischen 300 und 400 und besonders bevorzugt zwischen 330 und 350 mg KOH/g eingestellt.

Zudem ist es bevorzugt, in dem Schritt a) n-Butanol und iso-Butanol jeweils in einer Menge von 1 bis 18 Gew.-%, besonders bevorzugt von 7 bis 16 Gew.-% und ganz besonders bevorzugt von 8,5 bis 16 Gew.-%, bezogen auf die Summe der Mengen aller in dem Verfahren zugegebenen Verbindungen, also die Summe der Mengen von n-Butanol, iso-Butanol, Phosphorpentoxid, Titantetraisopropylat, Isopropanol, Ethanol und Ethylacetat, zuzugeben. Dabei beträgt das Gewichtsverhältnis von n-Butanol und iso-Butanol vorzugsweise 1:5 bis 5:1, besonders bevorzugt 1:2 bis 2:1, ganz besonders bevorzugt 1:1,5 bis 1,5:1 und höchst bevorzugt 1:1,25 bis 1,25:1, wie beispielsweise etwa 1:1.

In Weiterbildung des Erfindungsgedankens wird es vorgeschlagen, in dem Schritt a) Phosphorpentoxid in einer Menge von 1 bis 18 Gew.-%, besonders bevorzugt von 7 bis 18 Gew.-% und ganz besonders bevorzugt von 7 bis 16 Gew.-%, bezogen auf die Summe der Mengen aller in dem Verfahren zugegebenen Verbindungen, also die Summe der Mengen von n-Butanol, iso-Butanol, Phosphorpentoxid, Titantetraisopropylat, Isopropanol, Ethanol und Ethylacetat, zuzugeben. Dabei beträgt das Gewichtsverhältnis von Phosphorpentoxid zu der Summe an n Butanol und iso-Butanol vorzugsweise 1:5 bis 2:1, besonders bevorzugt 1:3 bis 1:1, ganz besonders bevorzugt 1:2,5 bis 1:1,5 und höchst bevorzugt 1:2,25 bis 1:1,75, wie beispielsweise etwa 1:2.

Gute Ergebnisse werden insbesondere erhalten, wenn in dem Schritt d) Titantetraisopropylat in einer Menge von 29 bis 60 Gew.-%, besonders bevorzugt von 35 bis 60 Gew.-% und ganz besonders bevorzugt von 40 bis 60 Gew.-%, bezogen auf die Summe der Mengen aller in dem Verfahren zugegebenen Verbindungen, also die Summe der Mengen von n-Butanol, iso-Butanol, Phosphorpentoxid, Titantetraisopropylat, Isopropanol, Ethanol und Ethylacetat, zugegeben wird. Dabei beträgt das Gewichtsverhältnis von Titantetraisopropylat zu der Summe an in dem Schritt a) zugegebenen n-Butanol und iso-Butanol vorzugsweise 6:1 bis 1:1, besonders bevorzugt 5:1 bis 1,25:1, ganz besonders bevorzugt 3,5:1 bis 1,5:1 und höchst bevorzugt 2,75:1 bis 1,5:1, wie beispielsweise etwa 2:1.

Schließlich werden in dem Schritt g) Isopropanol vorzugsweise in einer Menge von 0 bis 20 Gew.-%, besonders bevorzugt von 5 bis 15 Gew.-% und ganz besonders bevorzugt von 5 bis 10 Gew.-%, Ethanol vorzugsweise in einer Menge von 0 bis 2,5 Gew.-%, besonders bevorzugt von 0 bis 2 Gew.-% und ganz besonders bevorzugt von 0 bis 1,5 Gew.-% und Ethylacetat vorzugsweise in einer Menge von 0 bis 2 Gew.-%, besonders bevorzugt von 0 bis 1,5 Gew.-% und ganz besonders bevorzugt von 0 bis 1 Gew.-%, jeweils bezogen auf die Summe der Mengen aller in dem Verfahren zugegebenen Verbindungen, also die Summe der Mengen von n-Butanol, iso-Butanol, Phosphorpentoxid, Titantetraisopropylat, Isopropanol, Ethanol und Ethylacetat, zugegeben.

Ein weiterer Gegenstand der vorliegenden Erfindung ist ein Haftvermittler insbesondere zum Verbessern der Haftung einer Druckfarbe oder eines Drucklacks auf einem Substrat, insbesondere auf einer Lebensmittelverpackung, wobei der Haftvermittler ein Copolymer enthält, das aus i) wenigstens einem C₁₋₅-Alkyltitanatmonomer und/oder C₁₋₅-Alkylzirkonatmonomer, wobei die Alkylreste linear oder verzweigt sind, und ii) wenigstens einem Mono-C₄₋₁₀-alkylphosphatmonomer und/oder wenigstens einem Di-C₄₋₁₀-alkylphosphatmonomer zusammengesetzt ist, wobei der Haftvermittler weniger als 0,25 Gew.-%, bevorzugt maximal 0,20 Gew.-%, besonders bevorzugt maximal 0,15 Gew.-%, weiter bevorzugt maximal 0,10 Gew.-%, ganz besonders bevorzugt maximal 0,075 Gew.-%, noch weiter bevorzugt maximal 0,06 Gew.-% und höchst bevorzugt maximal 0,04 Gew.-% Tributylphosphat enthält.

Aufgrund der geringen Menge an Tributylphosphat als migrationsfähiger niedermolekularen Verbindung, ist dieser Haftvermittler hervorragend zur Verwendung in einer Druckfarbe bzw. in einem Drucklack zum Bedrucken einer Lebensmittelverpackung geeignet. Insbesondere zeichnet sich eine diesen Haftvermittler enthaltende Druckfarbe bzw. Drucklack durch eine hervorragende Haftung auf insbesondere Kunststoffverpackungen, wie beispielsweise solchen aus Polyethylenterephthalat oder aus Polyamidaus.

Nachfolgend wird die vorliegende Erfindung anhand eines die Erfindung erläuternden, aber nicht einschränkenden Beispiels näher erläutert.

### Beispiel

Es wurden 13,7 g n-Butanol, 13,7 g iso-Butanol und 13,1 g Phosphorpentoxid vermischt, wobei die Zugabegeschwindigkeiten der einzelnen Bestandteile so gewählt wurden, dass die Temperatur der Reaktionsmischung infolge der exothermen Reaktion zwischen den Bestandteilen auf 90 bis 95°C anstieg. Die Säurezahl lag bei 330 bis 350 mg KOH/g. Die Reaktionsmischung wurde für 1 Stunde bei dieser Temperatur belassen und dann auf 30 bis 35°C abgekühlt.

Anschließend wurden zu der Reaktionsmischung 48,7 g Titantetraisopropylat zugegeben, wobei die Zugabegeschwindigkeit so gewählt wurde, dass die Temperatur der Reaktionsmischung infolge der exothermen Reaktion zwischen den Bestandteilen auf 60 bis 65°C anstieg. Danach wurde die Mischung auf 80 bis 85°C erhitzt und bei dieser Temperatur für 2 Stunden belassen, bevor die Reaktionsmischung auf 40 bis 45°C abgekühlt wurde.

Daraufhin wurden zu der Mischung 9,2 g Isopropylalkohol und 1,6 g einer Mischung aus Ethanol und Ethylacetat in einem Gewichtsverhältnis von 90:10 zugegeben und die so erhaltene Zusammensetzung wurde für 30 gerührt.

Es wurde ein Copolymer mit einem mittleren gewichtsgemittelten Molekulargewicht von 1.350 g/mol erhalten, wobei der Anteil an Verbindungen mit einem gewichtsgemittelten Molekulargewicht von weniger als 1.000 g/mol in der Zusammensetzung 35,8 % betrug. Die Zusammensetzung wies nur Spuren an identifizierten niedermolekulargewichtigen Verbindungen auf, nämlich:
0,03 Gew.-% Tri-iso-propylphosphat,
0,02 Gew.-% Tri-n-propylphosphat,
0,02 Gew.-% Tri-iso-butylphosphat und
0,04 Gew.-% Tri-n-butylphosphat.

Am Markt erhältliche Titanhaftvermittler gemäß WO 2004/053003 A1 enthalten die 10- bis 100-fache Menge an manchen dieser Verunreinigungen.

## Patentansprüche

1. Haftvermittler insbesondere zum Verbessern der Haftung einer Druckfarbe oder eines Drucklacks auf einem Substrat, insbesondere auf einer Lebensmittelverpackung, wobei der Haftvermittler ein Copolymer enthält, das aus i) wenigstens einem C₁₋₅-Alkyltitanatmonomer und/oder C₁₋₅-Alkylzirkonatmonomer, wobei die Alkylreste linear oder verzweigt sind, ii) wenigstens einem Mono-C₄₋₁₀-alkylphosphatmonomer und iii) wenigstens einem Di-C₄₋₁₀-alkylphosphatmonomer zusammengesetzt ist, wobei die Mono- und Di-C₄₋₁₀-alkylphosphatmonomere sowohl lineare als auch verzweigte C₄₋₁₀-Alkylreste umfassen, wobei das molare Verhältnis von verzweigten C₄₋₁₀-Alkylresten bezogen auf die Summe von linearen und verzweigten C₄₋₁₀-Alkylresten in dem Copolymer 10 bis 90 % beträgt.

2. Haftvermittler nach Anspruch 1,
**dadurch gekennzeichnet, dass**
die Mono- und Di-C₄₋₁₀-alkylphosphatmonomere jeweils den gleichen C₄₋₁₀-Alkylrest aufweisen.

3. Haftvermittler nach Anspruch 1 oder 2,
**dadurch gekennzeichnet, dass**
die Mono- und Di-C₄₋₁₀-alkylphosphatmonomere jeweils einen C₄₋₆-Alkylrest aufweisen.

4. Haftvermittler nach zumindest einem der vorstehenden Ansprüche,
**dadurch gekennzeichnet, dass**
das Mono-C₄₋₁₀-alkylphosphatmonomer Monobutylphosphatmonomer und das Di-C₄₋₁₀-alkylphosphatmonomer Dibutylphosphatmonomer ist.

5. Haftvermittler nach zumindest einem der vorstehenden Ansprüche,
**dadurch gekennzeichnet, dass**
das molare Verhältnis von verzweigten C₄₋₁₀-Alkylresten bezogen auf die Summe von linearen und verzweigten C₄₋₁₀-Alkylresten in dem Copolymer 20 bis 80 %, bevorzugt 30 bis 70 %, besonders bevorzugt 40 bis 60 % und ganz besonders bevorzugt 45 bis 55 % beträgt.

6. Haftvermittler nach Anspruch 5,
**dadurch gekennzeichnet, dass**
das Mono-C₄₋₁₀-alkylphosphatmonomer Monobutylphosphatmonomer und das Di-C₄₋₁₀-alkylphosphatmonomer Dibutylphosphatmonomer ist, wobei das molare Verhältnis von iso-Butylresten bezogen auf die Summe von iso-Butylresten und n-Butylresten in dem Copolymer 20 bis 80 %, bevorzugt 30 bis 70 %, besonders bevorzugt 40 bis 60 % und ganz besonders bevorzugt 45 bis 55 % beträgt.

7. Haftvermittler nach zumindest einem der vorstehenden Ansprüche,
**dadurch gekennzeichnet, dass**
die Menge an in der Formulierung des Haftvermittlers enthaltenem, restlichem Tributylphosphat weniger als 0,25 Gew.-%, bevorzugt maximal 0,20 Gew.-%, besonders bevorzugt maximal 0,15 Gew.-%, weiter bevorzugt maximal 0,10 Gew.-%, ganz besonders bevorzugt maximal 0,075 Gew.-%, noch weiter bevorzugt maximal 0,06 Gew.-% und höchst bevorzugt maximal 0,04 Gew.-% beträgt.

8. Haftvermittler nach zumindest einem der vorstehenden Ansprüche,
**dadurch gekennzeichnet, dass**
das gewichtsgemittelte Molekulargewicht des Copolymers 800 bis 10.000 g/mol, bevorzugt 1.000 bis 2.000 g/mol und besonders bevorzugt 1.000 bis 1.500 g/mol beträgt.

9. Haftvermittler nach zumindest einem der vorstehenden Ansprüche,
**dadurch gekennzeichnet, dass**
der Haftvermittler weniger als 60 Gew.-%, bevorzugt weniger als 50 Gew.-%, besonders bevorzugt weniger als 45 Gew.-% und ganz besonders bevorzugt maximal 40 Gew.-% von Verbindungen mit einem gewichtsgemittelten Molekulargewicht von weniger als 1.000 g/mol enthält.

10. Haftvermittler nach Anspruch 8 und 9,
**dadurch gekennzeichnet, dass**
das gewichtsgemittelte Molekulargewicht des Copolymers 1.000 bis 2.000 g/mol beträgt und der Haftvermittler weniger als 40 Gew.-% von Verbindungen mit einem gewichtsgemittelten Molekulargewicht von weniger als 1.000 g/mol enthält.

11. Haftvermittler nach zumindest einem der vorstehenden Ansprüche,
**dadurch gekennzeichnet, dass**
das molare Verhältnis von in den Mono- und Di-C₄₋₁₀-alkylphosphatmonomeren enthaltenen P-OH-Gruppen zu dem Metall in dem C₁₋₅-Alkyltitanatmonomer und/oder C₁₋₅-Alkylzirkonatmonomer 0,5:1 bis 2,5:1, bevorzugt 1:1 bis 2:1, besonders bevorzugt 1,3:1 bis 1,8:1 und ganz besonders bevorzugt 1,5:1 bis 1,7:1 beträgt.

12. Haftvermittler nach zumindest einem der vorstehenden Ansprüche,
**dadurch gekennzeichnet, dass**
dieser als Komponente i) ein lineares oder verzweigtes C₁₋₅-Alkyltitanatmonomer, bevorzugt ein Tetra-C₁₋₅-alkyltitanatmonomer, besonders bevorzugt ein Tetra-C₂₋₄-alkyltitanatmonomer, ganz besonders bevorzugt ein Tetrapropyltitanatmonomer und höchst bevorzugt Tetraisopropyltitanat enthält.

13. Haftvermittler nach zumindest einem der vorstehenden Ansprüche,
**dadurch gekennzeichnet, dass**
das Copolymer aus wenigstens einem Tetraisopropyltitanatmonomer, wenigstens einem Monobutylphosphatmonomer und wenigstens einem Dibutylphosphatmonomer zusammengesetzt ist, wobei die Mono- und Dibutylphosphatmonomere sowohl iso-Butylreste als auch n-Butylreste umfassen, wobei das molare Verhältnis von iso-Butylresten bezogen auf die Summe von iso-Butylresten und n-Butylresten in dem Copolymer 10 bis 90 % beträgt.

14. Verfahren zur Herstellung eines Haftvermittlers nach einem der Ansprüche 1 bis 13 umfassend die nachfolgenden Schritte:
a) Bereitstellen einer Mischung aus einem C₄₋₁₀-n-Alkohol, einem C₄₋₁₀-iso-Alkohol und Phosphorpentoxid,
b) Reagieren der in dem Schritt a) bereitgestellten Mischung bei 60 bis 150°C für 0,1 bis 5 Stunden, bevorzugt bei 80 bis 100°C für 0,25 bis 2 Stunden,
c) Abkühlen der Reaktionsmischung auf 0 bis 50°C, bevorzugt auf Umgebungstemperatur,
d) Zugabe von einem C₁₋₅-Alkyltitanat und/oder C₁₋₅-Alkylzirkonat zu der in dem Schritt c) erhaltenen Mischung,
e) Reagieren der in dem Schritt d) bereitgestellten Mischung bei 40 bis 150°C für 0,1 bis 5 Stunden, bevorzugt bei 70 bis 90°C für 1 bis 3 Stunden,
f) Abkühlen der Reaktionsmischung auf 0 bis 50°C, bevorzugt auf Umgebungstemperatur, und
g) optional Zugabe von C₁₋₅-Alkohol und/oder Verdünnungsmittel.

## Claims

1. Adhesion promoter, in particular for improving the adhesion of a printing ink or printing lacquer on a substrate, in particular on food packaging, whereby the adhesion promoter contains a copolymer is composed of i) at least one C₁₋₅-alkyl titanate monomer and/or C₁₋₅-alkyl zirconate monomer, whereby the alkyl radicals are linear or branched, ii) at least one mono-C₄₋₁₀-alkyl phosphate monomer, and iii) at least one di-C₄₋₁₀-alkyl phosphate monomers, whereby the mono- and di-C₄₋₁₀-alkyl phosphate monomers comprise both linear and branched C₄₋₁₀-alkyl radicals, whereby the molar ratio of branched C₄₋₁₀-alkyl radicals relative to the sum of linear and branched C₄₋₁₀-alkyl radicals in the copolymer is between 10 and 90%.

2. Adhesion promoter according to claim 1,
**characterized in that**
the mono- and di-C₄₋₁₀-alkyl phosphate monomers each have the same C₄₋₁₀-alkyl radicals.

3. Adhesion promoter according to claim 1 or 2,
**characterized in that**
the mono- and di-C₄₋₁₀-alkyl phosphate monomers have a C₄₋₁₀-alkyl radical each.

4. Adhesion promoter according to at least one of the preceding claims,
**characterized in that**
the mono- C₄₋₁₀-alkyl phosphate monomer is mono butyl phosphate monomer and the di-C₄₋₁₀-alkyl phosphate monomer is dibutyl phosphate monomer.

5. Adhesion promoter according to at least one of the preceding claims,
**characterized in that**
the molar ratio of branched C₄₋₁₀-alkyl radicals relative to the sum of linear and branched C₄₋₁₀-alkyl radicals in the copolymer is between 20 and 80%, preferably 30 to 70%, particularly preferably 40 to 60%, and most preferable 15 to 55%.

6. Adhesion promoter according to claim 5,
**characterized in that**
the mono-C₄₋₁₀-alkyl phosphate monomer is mono butyl phosphate monomer and the di-C₄₋₁₀-alkyl phosphate monomer is dibutyl phosphate monomer, whereby the molar ratio of isobutyl radicals relative to the sum of isobutyl radicals and n-butyl radicals in the copolymer is between 20 and 80%, preferably 30 to 70%, particularly preferably 40 to 60%, and most preferably 45 to 55%.

7. Adhesion promoter according to at least one of the preceding claims,
**characterized in that**
the amount of the residual tributyl phosphate contained in the formulation of the adhesion promoter is less than 0.25 wt.-%, preferably not more than 0.20 wt.-%, particularly preferably not more than 0.15 wt.-%, further preferably not more than 0.10 wt.-%, very particularly preferably not more than 0.075 wt.-%, even more preferably not more than 0.06 wt.-%, and most preferably not more than 0.04 wt.-%.

8. Adhesion promoter according to at least one of the preceding claims,
**characterized in that**
the weight average molecular weight of the copolymer is 800 to 10,000 g/mol, preferably 1,000 to 2,000 g/mol, and particularly preferably 1,000 to 1,500 g/mol.

9. Adhesion promoter according to at least one of the preceding claims,
**characterized in that**
the adhesion promoter contains less than 60 wt.-%, preferably less than 50 wt.-%, particularly preferably less than 45 wt.-%, and most preferably not more than 40 wt.-% of compounds with a weight average molecular weight of less than 1,000 g/mol.

10. Adhesion promoter according to claim 8 or 9,
**characterized in that**
the weight average molecular weight of the copolymer is 1,000 to 2,000 g/mol, and the adhesion promoter contains less than 40 wt.-% of compounds with a weight average molecular weight of less than 1,000 g/mol.

11. Adhesion promoter according to at least one of the preceding claims,
**characterized in that**
the molar ratio of the P-OH-groups contained in the mono and di-C₄₋₁₀-alkyl phosphate monomers relative to the metals contained in the C₁₋₅-alkyl titanate monomers and/or the C₁₋₅-alkyl zirconate monomer is between 0.5:1 to 2.5:1, preferably 1:1 to 2:1, particularly preferably 1.3:1 to 1.8:1, and most preferably 1.5:1 to 1.7:1.

12. Adhesion promoter according to at least one of the preceding claims,
**characterized in that**
said promoter contains as a component i) a linear or branched C₁₋₅-alkyl titanate monomer, preferably a tetra-C₁₋₅-alkyl titanate monomer, particularly preferably a tetra-C₂₋₄-alkyl titanate monomer, very particularly preferably a tetra propyl titanate monomer, and most preferably tetra isopropyl titanate.

13. Adhesion promoter according to at least one of the preceding claims,
**characterized in that**
the copolymer is composed of at least one tetra isopropyl titanate monomer, at least one mono butyl phosphate monomer and at least one dibutyl phosphate monomer, whereby the mono- and dibutyl phosphate monomers contain both isobutyl radicals as well as n-butyl radicals, whereby the molar ratio of isobutyl relative to the amount of isobutyl radicals and n-butyl radicals in the copolymer is between 10 and 90%.

14. Method for producing an adhesion promoter according to any of the claims 1 to 13, comprising the following procedural steps:
a) provision of a mixture of a C₄₋₁₀-n-alcohol, a C₄₋₁₀-isoalcohol and phosphorus pentoxide,
b) reacting the mixture produced in step a) at 60 to 150°C for 0.1 to 5 hours, preferably at 80 to 100°C for 0.25 to 2 hours,
c) cooling of the reaction mixture to 0 to 50°C, preferably to the environmental temperature,
d) addition of a C₁₋₅-alkyl titanate and/or C₁₋₅-alkyl zirconate to the mixture produced in step c),
e) reacting the mixture produced in step d) at 40 to 150°C for 0.1 to 5 hours, preferably at 70 to 90°C for 1 to 3 hours,
f) cooling of the reaction mixture to 0 to 50°C, preferably to the environmental temperature, and
g) optionally addition of C₁₋₅-alcohol and/or diluting agents.

## Revendications

1. Promoteur d'adhésion en particulier pour améliorer l'adhésion d'une encre d'impression ou d'un vernis d'impression sur un substrat, en particulier sur un emballage de produits alimentaires, le promoteur d'adhésion comprenant un copolymère qui est composé de i) au moins un monomère de titanate d'alkyle en C₁₋₅ et/ou d'un monomère de zirconate d'alkyle en C₁₋₅, les radicaux alkyles étant linéaires ou ramifiés, ii) au moins un monomère de phosphate de monoalkyle en C₄₋₁₀ et iii) au moins un monomère de phosphate de dialkyle en C₄₋₁₀, dans lequel les monomères de phosphate de mono- et dialkyle en C₄₋₁₀ comprenant des radicaux alkyles en C₄₋₁₀ linéaires aussi bien que des radicaux alkyles en C₄₋₁₀ ramifiés, le rapport molaire des radicaux alkyles en C₄₋₁₀ ramifiés sur la somme des radicaux alkyles en C₄₋₁₀ linéaires et ramifiés dans le copolymère étant de 10 à 90 %.

2. Promoteur d'adhésion selon la revendication 1,
**caractérisé en ce que**
les monomères de phosphate de mono- et dialkyle en C₄₋₁₀ présentent chacun le même radical alkyle en C₄₋₁₀.

3. Promoteur d'adhésion selon la revendication 1 ou 2,
**caractérisé en ce que**
les monomères de phosphate de mono- et dialkyle en C₄₋₁₀ présentent chacun un radical alkyle en C₄₋₆.

4. Promoteur d'adhésion selon l'une au moins des revendications précédentes,
**caractérisé en ce que**
le monomère de phosphate de monoalkyle en C₄₋₁₀ est un monomère de phosphate de monobutyle et le monomère de phosphate de dialkyle en C₄₋₁₀ est un monomère de phosphate de dibutyle.

5. Promoteur d'adhésion selon l'une au moins des revendications précédentes,
**caractérisé en ce que**
le rapport molaire des radicaux alkyles en C₄₋₁₀ ramifiés sur la somme des radicaux alkyles en C₄₋₁₀ linéaires et ramifiés dans le copolymère est de 20 à 80 %, de préférence de 30 à 70 %, de manière préférée de 40 à 60 % et de manière particulièrement préférée de 45 à 55 %.

6. Promoteur d'adhésion selon la revendication 5,
**caractérisé en ce que**
le monomère de phosphate de monoalkyle en C₄₋₁₀ est un monomère de phosphate de monobutyle et le monomère de phosphate de dialkyle en C₄₋₁₀ est un monomère de phosphate de dibutyle, le rapport molaire des radicaux iso-butyle sur la somme des radicaux iso-butyle et des radicaux de n-butyle dans le copolymère est de 20 à 80 %, de préférence de 30 à 70 %, de manière préférée de 40 à 60 % et de manière particulièrement préférée de 45 à 55 %.

7. Promoteur d'adhésion selon l'une au moins des revendications précédentes,
**caractérisé en ce que**
la quantité de phosphate de tributyle restant contenu dans la formulation du promoteur d'adhésion est de moins de 0,25 % en poids, de préférence au maximum de 0,20 % en poids, de manière préférée au maximum de 0,15 % en poids, de manière particulièrement préférée au maximum de 0,10 % en poids, de manière tout particulièrement préférée au maximum de 0,075 % en poids, de manière encore plus préférée au maximum de 0,06 % en poids et de préférence absolue au maximum de 0,04 % en poids.

8. Promoteur d'adhésion selon l'une au moins des revendications précédentes,
**caractérisé en ce que**
le poids moléculaire moyenné du copolymère est de 800 à 10 000 g/mol, de préférence de 1 000 à 2 000 g/mol et de manière particulièrement préféré de 1 000 à 1 500 g/mol.

9. Promoteur d'adhésion selon l'une au moins des revendications précédentes,
**caractérisé en ce que**
le promoteur d'adhésion comprend moins de 60 % en poids, de préférence moins de 50 % en poids, de préférence particulière moins de 45 % en poids et de manière particulièrement préférée au maximum 40 % en poids de composés ayant un poids moléculaire moyenné de moins de 1 000 g/mol.

10. Promoteur d'adhésion selon la revendication 8 et 9,
**caractérisé en ce que**
le poids moléculaire moyenné du copolymère est de 1 000 à 2 000 g/mol et le promoteur d'adhésion comprend moins de 40 % en poids de composés ayant un poids moléculaire moyenné de moins de 1 000 g/mol.

11. Promoteur d'adhésion selon l'une au moins des revendications précédentes,
**caractérisé en ce que**
le rapport molaire des groupes P-OH contenus dans les monomères de phosphate de mono- et dialkyle en C₄₋₁₀ sur le métal dans le monomère de titanate d'alkyle en C₁₋₅ et/ou dans le monomère de zirconate d'alkyle en C₁₋₅ est de 0,5 : 1 à 2,5 : 1, de préférence de 1 : 1 à 2 : 1, de manière particulièrement préférée de 1,3 : 1 à 1,8 : 1, et de manière tout particulièrement préférée de 1,5 : 1 à 1,7 : 1.

12. Promoteur d'adhésion selon l'une au moins des revendications précédentes,
**caractérisé en ce que**
celui-ci comprend à titre de composante i) un monomère de titanate d'alkyle en C₁₋₅, de préférence un monomère de titanate de tétraalkyle en C₁₋₅, de préférence particulière un monomère de titanate de tétraalkyle en C₂₋₄, de manière particulièrement préférée un monomère de titanate de tétrapropyle et de préférence absolue un titanate de tétra-isopropyle.

13. Promoteur d'adhésion selon l'une au moins des revendications précédentes,
**caractérisé en ce que**
le copolymère est composé d'au moins un monomère de titanate de tétra-isopropyle, d'au moins un monomère de phosphate de monobutyle et d'au moins un monomère de phosphate de dibutyle, les monomères de phosphate de mono- et de dibutyle comprenant aussi bien des radicaux d'isobutyle que des radicaux de n-butyle, le rapport molaire des radicaux d'isobutyle sur la somme des radicaux d'isobutyle et des radicaux de n-butyle dans le copolymère étant de 10 à 90 %.

14. Procédé de préparation d'un promoteur d'adhésion selon l'une des revendications 1 à 13, comprenant les étapes suivantes consistant à :
a) préparer un mélange d'un n-alcool en C₄₋₁₀, un iso-alcool en C₄₋₁₀ et de pentoxyde de phosphore,
b) laisser réagir le mélange préparé dans l'étape b) à 60 à 150°C pendant 0,1 à 5 heures, de préférence à 80 à 100 °C pendant 0,25 à 2 heures,
c) refroidir le mélange réactionnel à 0 à 50 °C, de préférence à la température ambiante,
d) ajouter au mélange obtenu dans l'étape c) un titanate d'alkyle en C₁₋₅ et/ou d'un zirconate d'alkyle en C₁₋₅,
e) laisser réagir le mélange préparé dans l'étape d) à 40 à 150°C pendant 0,1 à 5 heures, de préférence à 70 à 90 °C pendant 1 à 3 heures,
f) refroidir le mélange réactionnel à 0 à 50 °C, de préférence à la température ambiante, et
g) ajouter en option un alcool en C₁₋₅ et/ou un diluant.
